(19) **Europäisches Patentamt / European Patent Office / Office européen des brevets**

(11) **EP 1 722 512 B1**

(12) **EUROPEAN PATENT SPECIFICATION**

(45) Date of publication and mention
of the grant of the patent:
**02.01.2008 Bulletin 2008/01**

(51) Int Cl.:
*H04L 12/28* (2006.01)  *H04L 12/56* (2006.01)
*H04Q 7/38* (2006.01)  *H04B 7/06* (2006.01)
*H04L 1/00* (2006.01)

(21) Application number: **06008225.2**

(22) Date of filing: **20.04.2006**

(54) **Adaptive feedback method of cellular communication**

Verfahren zur adaptiven Rückführungssteuerung von zellularer Kommunikation

Procédé de rétroaction adaptive de la communication cellulaire

(84) Designated Contracting States:
**DE FI FR GB IT SE**

(30) Priority: **20.04.2005 US 673130 P**
**16.06.2005 KR 20050051972**

(43) Date of publication of application:
**15.11.2006 Bulletin 2006/46**

(73) Proprietors:
• **Samsung Electronics Co., Ltd.**
**Suwon-si, Gyeonggi-Do (KR)**
• **Board of Regents, The University of Texas System**
**Austin TX 78748 (US)**

(72) Inventors:
• **Cho, Sung-Hyun**
**Yeongtong-gu**
**Suwon-si**
**Gyeonggi-do (KR)**
• **Yun, Sang-Boh**
**Yeongtong-gu**
**Suwon-si**
**Gyeonggi-do (KR)**
• **Tang, Taiwen**
**Austin, TX 78712-0240 (US)**
• **Heath, Robert W.**
**Austin, TX 78729 (US)**

(74) Representative: **Grünecker, Kinkeldey, Stockmair & Schwanhäusser**
**Anwaltssozietät**
**Maximilianstrasse 58**
**80538 München (DE)**

(56) References cited:
WO-A-20/04032401  WO-A-20/05107125
US-A1- 2005 030 897

• ZHONG-HAI HAN ET AL: "Opportunistic scheduling with partial channel information in OFDMA/FDD systems" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 511-514, XP010788428 ISBN: 0-7803-8521-7
• SVEDMAN P ET AL: "A QoS-aware proportional fair scheduler for opportunistic OFDM" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 558-562, XP010788438 ISBN: 0-7803-8521-7

**Description**

The present invention relates to a cellular communication and, in particular, to a feedback system and method which is capable of efficiently collecting channel information from mobile stations (MSs) for cellular communication.

Cellular wireless communication networks support the transmission of data between a base station and multiple user terminals. In such systems that support high-speed data transmission, the link from the base station to the mobile system requires high capacity. One mechanism to improve throughput is to schedule transmissions to user terminals based in part on their channel state information. This method, known as multi-user diversity, sends data to user terminals when their channel conditions are good. Unfortunately, acquiring feedback from multiple user terminals takes system resources away from the uplink channel, from the user terminals to the base station. Thus acquiring channel state information for many user terminals is difficult to perform in practice.

Opportunistic beamforming has been proposed as such a multi-user diversity method implemented with scheduling in cellular systems based on channel station information. The opportunistic beamforming method assumes that the channel information is received perfectly from each user terminal. The performance gain of multi-user diversity grows as the number of active users in the system becomes large. In the opportunistic beamforming method, however, the amount of channel information that needs to be fed back to the base station also increases with the number of users.

A threshold-based feedback mechanism has been proposed to exploit the multi-user diversity. The amount of feedback, however, still increases in proportion to the total number of user terminals in the threshold-based feedback mechanism.

An opportunistic splitting algorithm proposed for the uplink multiple access channel is algorithmically attractive, however, it does not solve the system level design issues of multi-user feedback, and it is not directly applicable to downlink multi-user scheduling. Further, it is may be limited to the algorithmic assumptions in real systems.

The present invention has been made in an effort to solve the above problems.

US2005/030897 A1 relates to a wireless communication system in which a transmitter may adaptively select between a post-data channel feedback system and a pre-data channel feedback system based at least in part on packet length and channel conditions. In particular, a timing diagram of a wireless local area network system is shown utilizing pre-data channel feedback. In more detail, a clear to send packet including channel information is sent back to a transmitter by a receiver prior to a transmission of a data packet from the transmitter to the receiver. Furthermore, a timing diagram of a wireless local area network system is shown which utilizes post-data channel feedback. In more detail, an acknowledgement packet including channel information is transmitted from a receiver to a transmitter. After receiving the channel information, the transmitter may make appropriate changes based on the channel information for subsequent transmissions. In addition, it is shown that a wireless local area network system may adaptively select between operation in a pre-data channel feedback mode and a post-data channel feedback mode based on general information received either from an acknowledgement packet or from a clear to send packet.

WO2004/032401 A1 discloses a method of communication over a wireless network having a plurality of communication resources formed between a plurality of transmitters and at least one receiver. A characteristic for each communication resource of said plurality of communications resources is determined. A set of weighting factors to be applied to the plurality of transmitters is selected based on the communication resource characteristics. For each communication resource of said plurality of communication resources a quality indication is determined based on the selected weighting factors. Said plurality of communication resources is allocated depending on said quality indication.

It is the object of the present invention to enable an efficient collection of channel information in cellular communication.

This object is solved by the subject matter of the independent claims.

Preferred embodiments are defined in the dependent claims.

It is an aspect of the present invention to provide an adaptive feedback system and method that is capable of improving the reliability of services scheduling by efficiently collecting the channel information.

It is another aspect of the present invention to provide an adaptive feedback system and method that is capable of improving system performance with the reliable service scheduling based on the efficient collection of channel information.

In order to achieve the above, in one aspect of the present invention, the adaptive feedback method for a cellular communication system having plural terminals feeding back channel information to an access point, selects one of at least two feedback modes on the basis of system parameters, optimizes control parameters associated with the selected feedback mode, and feeds back the channel information from the terminals to the access point using the optimized control parameter in the selected feedback mode.

In another aspect of the present invention, the adaptive feedback method for a cellular communication system having plural terminals feeding back channel information to an access point selects one of an opportunistic mode and a polling mode as a feedback mode between the access point and the terminals on the basis of system parameters, sets up the access point and the terminals for the selected feedback mode, and feeds back the channel information from the terminals to the access point in the selected feedback mode.

In another aspect of the present invention, a cellular communication system includes an access point which selects one of at least two feedback modes on the basis of a mode selection parameter and a plurality of mobile stations, each feeding back channel information based on the selected feedback mode. Preferably, the access point includes a scheduler which schedules services to the mobile stations and determines service rate based on the channel information and traffic information associated with the services, and a central feedback controller which generates feedback control signal for controlling the selected feedback mode. The central feedback controller includes a mode selector which compares the mode selection parameter with a threshold value and selects the feedback mode based on a comparison result and an optimizer which dynamically optimizes control parameters associated with the feedback mode selected by the mode selector. Preferably, each mobile station includes a receiving processor that generates channel information and a local feedback controller that adjusts a feedback setting based on the feedback control signal received from the access point and feed backs the channel information with the feedback settings. The local feedback controller includes a local mode selector that selects the feedback mode based on the feedback control signal from the access point, and a parameter selector that selects parameters to be utilized for the selected feedback mode and feeds back the channel information with the selected parameter on the feedback settings.

The present invention will be more clearly understood from the following detailed description taken in conjunction with the accompanying drawings, in which:

FIG. 1 is a schematic block diagram illustrating a multi-user multiple-input multiple-output (MIMO) cellular communication system according to the present invention;

FIG. 2 illustrates uplink and downlink frames for a non-reciprocal system;

FIG. 3 is a block diagram illustrating the BS of FIG. 1 in more detail;

FIG. 4 is a block diagram illustrating an MS of FIG. 1 in more detail;

FIG. 5 is a flowchart illustrating the adaptive feedback method according to a preferred embodiment of the present invention;

FIG. 6 is a flowchart illustrating a procedure of the opportunistic mode of FIG. 5 in view of the BS;

FIG. 7 is a flowchart illustrating a procedure of the opportunistic mode of FIG. 5 in view of each MS;

FIG. 8 is a block diagram illustrating a framing structure of a dedicated channel mode for the adaptive feedback method of the present invention;

FIG. 9 is a block diagram illustrating a framing structure of an opportunistic mode for the adaptive feedback method of the present invention;

FIG. 10 is a block diagram illustrating a framing structure of a random backoff with carrier sensing mode for the adaptive feedback method of the present invention;

FIG. 11 is a block diagram illustrating a framing structure of a polling mode for the adaptive feedback method the present invention; and

FIG. 12 is a block diagram illustrating a framing structure of a coordinated mode for the adaptive feedback method of the present invention.

An adaptive feedback method and system according to the present invention will be described hereinafter with reference to the accompanying drawings.

The present invention introduces a central feedback controller, located at the base station (BS), and a local feedback controller, located at each mobile station (MS). The feedback controllers work together to limit the amount of feedback data required to each user (MS). There are many ways of coordinating how MSs send feedback information to the BS. In the present invention, one of several feedback modes is selected based on the feedback information as well as information about the current channel state. Additionally, a novel random access approach that uses random access control channels is employed in order to send feedback from the MSs to the BS.

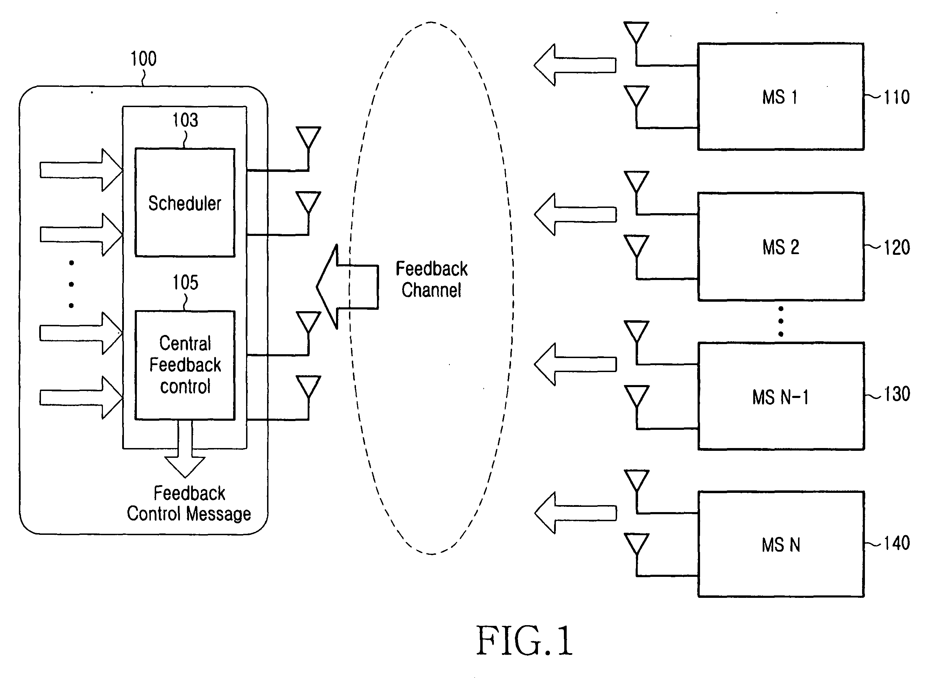

FIG. 1 is a schematic block diagram illustrating a multi-user multiple-input multiple-output (MIMO) cellular communication system according to the present invention.

In FIG. 1, the exogenous traffic arrivals for different mobile stations (MSs) 110, 120, 130, and 140 are processed by a BS 100 and then are served via downlink transmission at a certain transmission rate in each scheduling frame.

The BS 100 schedules the services and determines the service rate based on the feedback and traffic information using a scheduling rule in each scheduling frame. The BS 100 requires the channel state information of the MSs 110, 120, 130, and 140 as inputs for the scheduling decision, such as scheduling policy and orders.

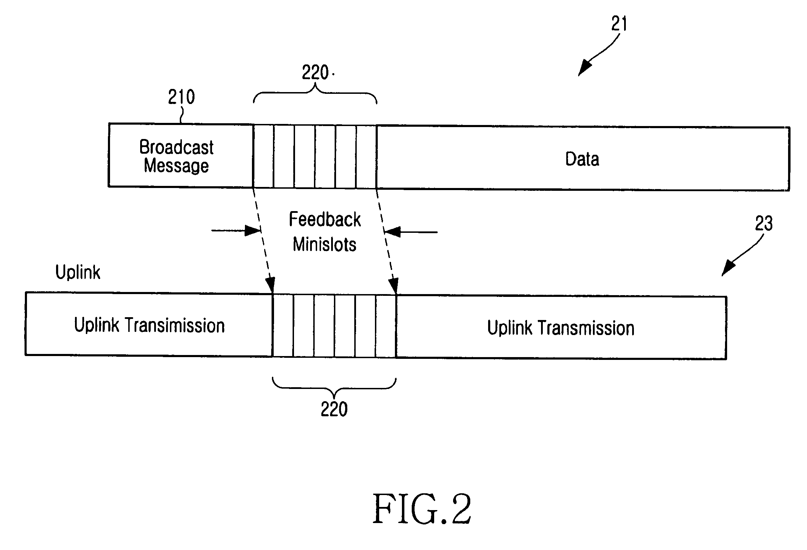

For feeding back the channel state information, a feedback channel is assigned to the MSs 110, 120, 130, and 140 at the beginning of each scheduling frame. Frequent feedback of such information is typically required in systems with non-reciprocal channel information, such as frequency division duplex (FDD) cellular systems. The feedback channel is a logical control channel that is used to carry the feedback information between the MSs 110, 120, 130, and 140 and the BS 100. Typically, the feedback channel has a duration that consists of mini-slots 220 within both downlink and uplink frames 21 and 23 as illustrated in FIG. 2. The feedback control message 210 is broadcasted in the downlink before the feedback mini-slots 220. Other implementations of the feedback channel may include dedicated frequency bands, coded channels in code division multiple access (CDMA) systems, and frequency tones in orthogonal frequency division multiplexing (OFDM) systems for example.

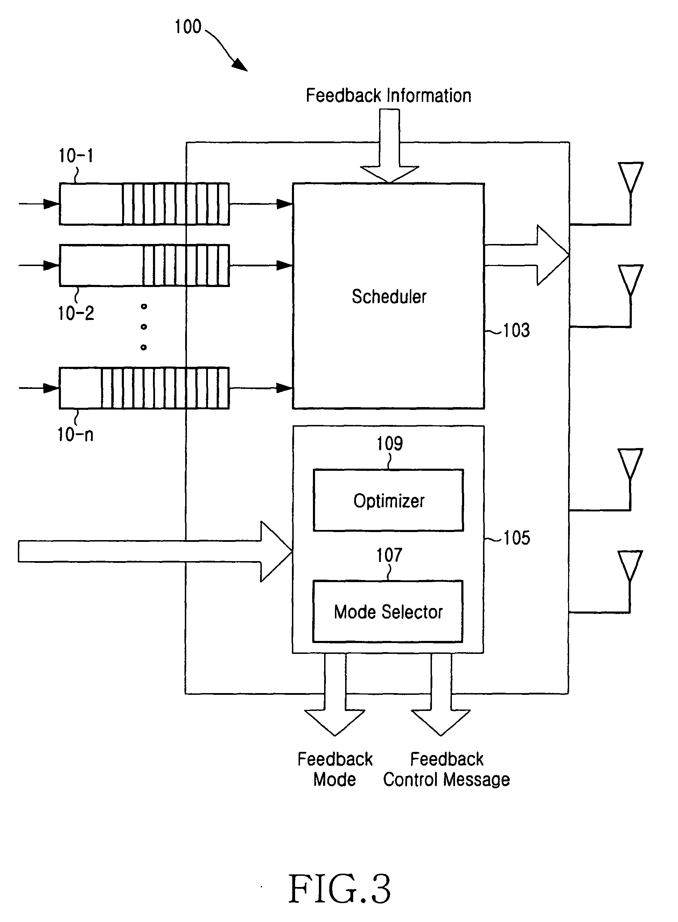

FIG. 3 is a block diagram illustrating the BS of FIG. 1 in more detail. In FIG. 3, the exogenous traffic arrivals for different MSs 110, 120, 130, and 140 are backlogged in the queues 10-1, 10-2, ..., and 10-n of a base station (BS) 100. The BS 100 includes a scheduler 103, which schedules the service and determines the service rate, based on the feedback and traffic information using a scheduling rule in each scheduling frame; and a central feedback controller 105 to generate feedback control message for controlling the feedback operation of the system.

The scheduler 103 requires channel state information of the MSs 110, 120, 130, and 140 as input data for the scheduling decision. The scheduling decision, such as the scheduling policy and orders, is made with the queue state information and mobile users' channel information that is fed back through the feedback channel.

The central feedback controller 105 determines the feedback mode to be utilized and controls feedback operations under each feedback mode. The central feedback controller 105 interacts with the scheduler 103 to make control decisions for the feedback channel. The input data to the central feedback controller 105 includes system information, traffic information, and the knowledge of the scheduling principle. The system information describes the operation status of the system, and includes the number of active MSs, the transmit signal-to-noise ratio, and a priori knowledge on the possible channel state variation of the MSs (for example, distribution information), etc. The traffic information describes the queuing dynamics of various users.

The central feedback controller 105 includes a mode selector 107 to select the feedback mode and an optimizer 109 to dynamically optimize the feedback parameters for a selected feedback mode. The central feedback controller 105 makes the decision on the feedback mode and the feedback parameter based on the traffic and system information. Once the feedback mode is selected, the BS 100 broadcasts the feedback mode information to all the MSs 110, 120, 130, and 140. The feedback parameters are adjusted dynamically according to the traffic and system information, and they are packaged into feedback control messages and broadcasted to the MSs. The feedback mode information and the feedback parameters can be packaged into the same feedback control messages.

The mode selector 107 determines the feedback mode with reference to the traffic information and the system information. All input data to the central feedback controller 105 can be fed to the mode selector 107 to make the decision. The tradeoff is based on the system information and the traffic information. The system information and the traffic information are used for determining a tradeoff parameter, which is used for selecting the feedback mode.

A preferred mechanism of the mode selection is using lookup tables of feedback modes. In order to select the feedback mode, preferably, a lookup table is provided which maps values of a mode selection parameter obtained in consideration of the system parameter, the traffic parameter, and the tradeoff parameter to the corresponding feedback modes. By examining the mode selection parameter obtained from the input parameters to the lookup table, such as the number of active MSs and the number of feedback mini-slots, the corresponding entry in the lookup table can be located, which specifies the feedback mode. The lookup tables need to be designed before system deployment based on offline simulation or analysis. These relations can also be obtained from simulations or analysis. Also, the raw parameters can be utilized for selecting the feedback mode.

Once the mode selector 107 selects a feedback mode, the optimizer 109 optimizes the control parameters associated with the selected feedback mode under certain performance criteria.

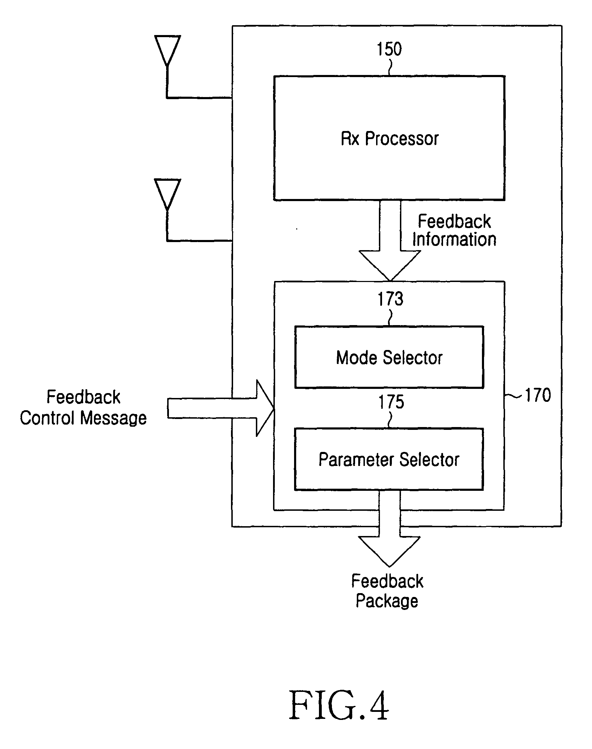

FIG. 4 is a block diagram illustrating an MS of FIG. 1 in more detail. In FIG. 4, each MS includes a receiving processor 150 and a local feedback controller 170 which dynamically adjusts the feedback settings according to the feedback control message that are broadcasted by the BS 100. The original feedback information (the channel state) is generated at the receiving processor 150 using channel estimation algorithms.

The local feedback controller 170 includes a local mode selector 173 and a parameter selector 175. The local mode selector 173 selects a feedback mode according to the feedback control message (or feedback mode information) from the BS 100 and the parameter selector 175 selects parameters to be utilized for the selected feedback mode according to the feedback control messages (or feedback parameters). The feedback information is packaged into a feedback data package with the selected mode and parameters and then is sent back to the BS 100 on the feedback setting. The packaging operation typically includes quantization to the channel state information, appending the package header, and performing error coding.

The feedback mode is defined as a mechanism of assigning and utilizing feedback channels. Specifically, it describes how feedback resources are allocated to different MSs and in turn implies how the MSs will feed back information using the allocated resources. Essentially, feedback modes are different implementations of feedback channels. More importantly, each mode defines the mechanism of accessing the feedback channel for each MS. In the present invention several feedback modes can be utilized. Under each feedback mode, variations on utilizing the feedback channel are parameterized by predefined control parameters. These control parameters can be adjusted to improve the feedback channel utilization under different system status.

An operation of the above structured adaptive feedback system will be described hereinafter. In an adaptive feedback method according to of the present invention, an opportunistic mode and a polling mode are exemplary employed for feeding back the channel information. One of the two modes is selected on the basis of the number of active MSs N and the number of mini-slots K.

When the number of active MSs is small, i.e., $N < \alpha K$, the polling mode is more preferable than the opportunistic mode in terms of system throughput metric. The contention-based nature of the opportunistic feedback mode leads to performance loss when compared to the polling mode. The opportunistic mode, however, offers more performance advantages in average system throughput than the polling mode when the number of active MSs is large, i.e., $N \leq \alpha K$. This is attributed to the adaptive adjustment of the channel power threshold and the random access probability based on the number of active MSs in the opportunistic feedback mode. Here, $\alpha$ is the tradeoff parameter. Essentially, the tradeoff parameter determines the switching point as a function of the number of MSs and the number of mini-slots. The tradeoff parameter may be determined by simulations, analysis, or an ad hoc rule-of-thumb. In this embodiment this parameter is found through a simulation procedure. For example, if the throughput is the desired performance metric then the overall system throughput would be computed for each feedback mode as a function of the number of active MSs. The intersections of the simulation curves would determine the feedback mode switching point. In another embodiment $\alpha$ is found through a system implementation. The system starts with one feedback mode and periodically switches to other feedback modes. Overall throughput is monitored and optimal values of $\alpha$ are computed. For example, a preferred value of $\alpha$ is 2.2 for the case in which all users experience identical Rayleigh fading.

Once the opportunistic mode is selected as the feedback mechanism, it is required to optimize the parameters associated with the opportunistic mode for maximize the system throughput.

In the opportunistic mode, the channel power threshold $\eta$ and the random feedback probability $p$ are the corresponding optimization parameters. The mean sum rate over all active MSs may be used as an optimization criterion. The optimization problem can be stated as maximizing the long term mean sum rate parameterized by $\eta$ and $p$ under the constraint on the ranges of these parameters. The optimizer 109 uses iterative optimization algorithms to solve the optimization problems. Either offline or online computation of these parameters is preferable. The offline computation requires a priori information of the channel statistics, and targeting on maximizing the expected system throughput. The online computation, however, is implemented based on a closed-loop update of the parameters $\eta$ and $p$ based on the periodic system throughput measurement.

The offline implementation is done through an optimization procedure that aims to maximize the long-term average system throughput. The formulation of the average system throughput in the adaptive feedback method of the present invention requires the statistics of the channel variations, the scheduling rule, and the number of active MSs. An iterative algorithm such as the constrained gradient based search can be applied to find a good selection of the parameters.

In this embodiment, N denotes the number of active MSs and K denotes the number of mini-slots. It is assumed that the channel process for all MSs is stationary. To simplify the notation, the time index is dropped from all the parameters for the analysis. The number of MSs whose channel powers are above the threshold $\eta$ is denoted by $T$. The channel power of the $j^{th}$ MS is denoted by $\chi_j = |h_j|^2$. All MS channels are assumed to be independently and identically distributed, thus the index $j$ can be dropped and the channel power distribution for all users can be denoted as $f_\chi(x)$.

Define $\alpha(\eta) = P\{\chi \geq \eta\}$ to be the probability that the channel power is above the threshold for one MS

$$\alpha(\eta) = \int_\eta^\infty f_\chi(x)dx.$$

Binary random variable $S_j$ is used to denote the event that the $j^{th}$ MS is selected at the BS 100. When $S_j$ takes 1, the $j^{th}$ user is selected. The joint probability density function of $T$, $S_j$ and $\chi_j$ can be derived as the following Equation 1.

$$P_d\{\chi_j = x, S_j = 1, T = m\} = f_{\chi_j}(x)\binom{N-1}{m-1}\alpha(\eta)^{m-1}[1-\alpha(\eta)]^{N-m}\{\frac{1}{m}(1-[1-m(1-p)^{m-1}p]^K) +$$

$$\frac{1}{N}[1-m(1-p)^{m-1}p]^K\}I\{m > 0, x > \eta\} + f_{\chi_j}(x)\binom{N-1}{m}\alpha(\eta)^m[1-\alpha(\eta)]^{N-m}[1-m(1-p)^{m-1}p]^K$$

$$\times \frac{1}{N}I\{0 \leq m \leq N-1, x \leq \eta\}$$

...Equation 1

where $I\{\cdot\}$ denotes the indicator function. The first term in the summation characterizes the probability density that the $j^{th}$ MS's channel power is above the threshold $\eta$, and it is selected either due to the successful feedback or because of the random selection when all users whose channel powers are above the threshold fail to feed back.

The second term expresses the probability density that the $j^{th}$ MS's channel power is below the threshold $\eta$, and it is selected due to the random selection at the BS. The mean sum rate of all the MSs can be written as Equation 2.

$$C(p,\eta) = \sum_{j=1}^{N} E_{(\chi_j, S_j, T)}[\log_2(1 + \rho\chi_j)I\{S_j = 1\}] \ldots \text{ Equation 2}$$

where $\rho$ is the average signal to noise ratio at the MS.

The optimization of parameters $p$ and $\eta$ is important for maximizing sum rate. With a pre-selected $K$ and a given number of active MSs $N$, the optimization problem is formulated as follows:

$$\max_{p,\eta} C(p,\eta)$$
$$s.t. \ \ 0 \le p \le 1, \ \eta \ge 0$$

The optimization may not be convex. In this embodiment, a simple constrained gradient search method is applied to find a local maximizer under an assumed channel power distribution.

The scheduler at the BS controls the fair scheduling to the MSs under the Opportunistic Mode. To further improve the performance, a fairness constraint can be applied to the original optimization problem. The purpose of the optimization is to find suitable choices of the feedback threshold and the feedback probability to achieve the best overall system throughput as well as meet the fairness requirement.

Another useful enhancement to the scheme is to use multiple scheduling classes with different channel power thresholds and feedback probabilities, and perform an optimization of these parameters to maximize the overall system throughput under the imposed fairness constraints to each class of MSs.

It is assumed that all MSs' channels follow i.i.d Rayleigh fading with zero mean and unit variance. The channel power $\chi$ follows exponential distribution, and the probability density function for $\chi$ can be written as $f_\chi(x) = e^{-x}$. Thus the probability that the channel power is above the threshold $\eta$ is $\alpha(\eta) = e^{-\eta\chi}$.

The mean sum rate can then be simplified as Equation 3.

$$C(p,\eta) = N\sum_{m=1}^{N}\int_{\eta}^{\infty}\log_2(1+\rho x)e^{-x}dx \cdot \binom{N-1}{m-1}\alpha(\eta)^{m-1}[1-\alpha(\eta)]^{N-m}\{\frac{1}{m}+(\frac{1}{N}-\frac{1}{m})[1-m(1-p)^{m-1}p]^K\}$$
$$+\sum_{m=0}^{N-1}\int_{0}^{\eta}\log_2(1+\rho x)e^{-x}dx \cdot \binom{N-1}{m}\alpha(\eta)^{m}[1-\alpha(\eta)]^{N-m}[1-m(1-p)^{m-1}p]^K$$

$$\ldots \text{Equation 3}$$

It is possible to find the optimal solution to the parameters by an iterative constrained gradient search.

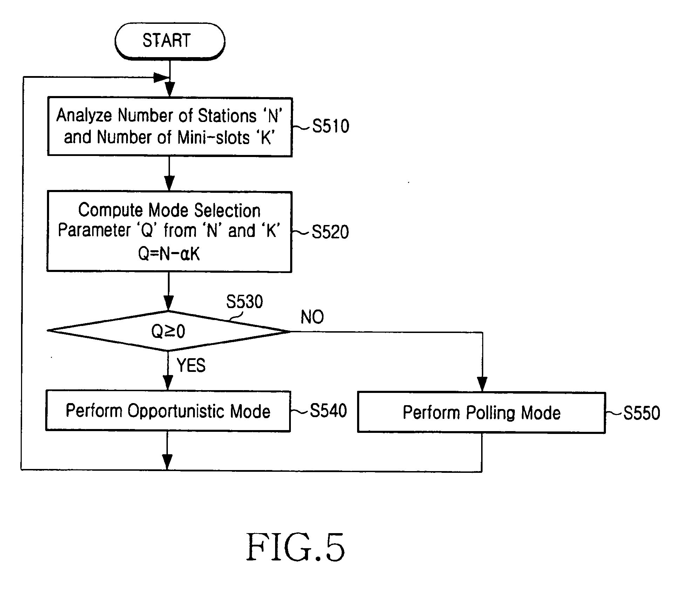

For the online implementation, the BS monitors the average system throughput in a time window. The BS adjusts the parameters $\eta$ and $p$ periodically, and collects the average throughput after each parameter update, denoted by $C(p,\mu)$. A preferred algorithm for parameter update is the Finite Difference Stochastic Approximation (FDSA) algorithm. For the parameter pair $(p_k, \eta_k)$ at the $k^{th}$ update, it is required to measure the perturbations near this parameter pair, and numerically to evaluate the gradient of the average throughput within a time window. The parameter update follows the recursive procedure in the FDSA algorithm. FIG. 5 is a flowchart illustrating the adaptive feedback method according to the present invention.

In FIG. 5, the BS analyzes the number of the MSs 'N' and the number of mini-slots 'K' on the basis of the system information and the traffic information at step S510 and then computes a mode selection parameter 'Q' from the N and K at step S520. Once the mode selection parameter Q is determined, the BS determines whether or not Q is greater than or equal to '0' at step S530. If Q is greater than or equal to 0, the BS selects the opportunistic mode, broadcasts a mode selection message indicating the opportunistic mode with η **and** *p*, to the MSs, and then enters the opportunistic mode at step S540. Otherwise, the BS selects the polling mode, broadcasts a mode selection message indicating the polling mode to the MSs, and then enters the polling mode at step S550. The mode selection message includes a feedback mode indicator and may contain parameters required for selected feedback mode.

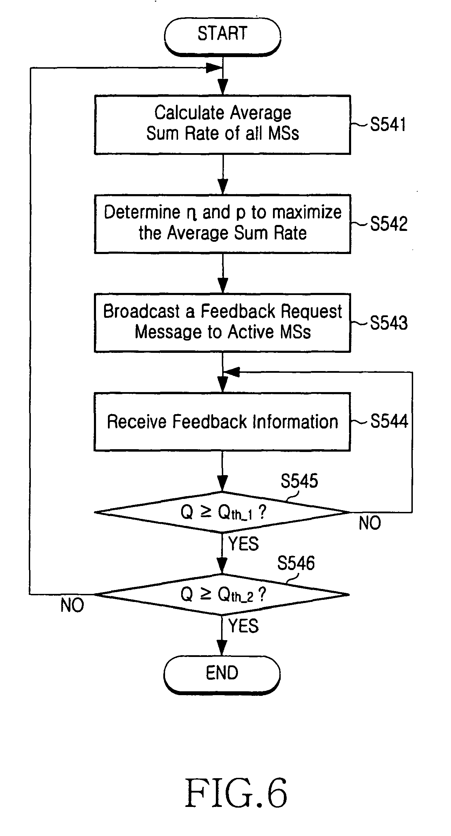

FIG. 6 is a flowchart illustrating a procedure of the opportunistic mode of FIG. 5 at a BS. As shown in FIG. 6, once the BS enters the opportunistic mode, the BS calculates the mean sum rate of all the MSs on the basis of the traffic information or channel information received from the MSs at step S541 and then determines a channel power threshold η and a random feedback probability *p* to maximize the mean sum rate at step S542. Sequentially, the BS broadcasts the feedback request message including η and *p* to the MSs at step S543 and receives, in response to the feedback request message, feedback information in a time window from the MSs at step S544. The BS counts the number of MSs on the basis of the feedback information from the MS, calculates the mode selection parameter Q using the current N and K to be used for feedback, and determines whether the current Q is greater than or equal to a first mode selection parameter threshold $Q_{threshold\_1}$ at step S545. If Q is greater than or equal to $Q_{threshold\_1}$, the BS determines whether Q is greater than or equal to a second mode selection parameter threshold $Q_{threshold\_2}$ at step S546. Otherwise, the algorithm goes to the step S544. If Q is greater than or equal to $Q_{threshold\_2}$, the BS terminates the opportunistic mode for reselecting the feedback mode. Otherwise, the algorithm goes back to the step S541.

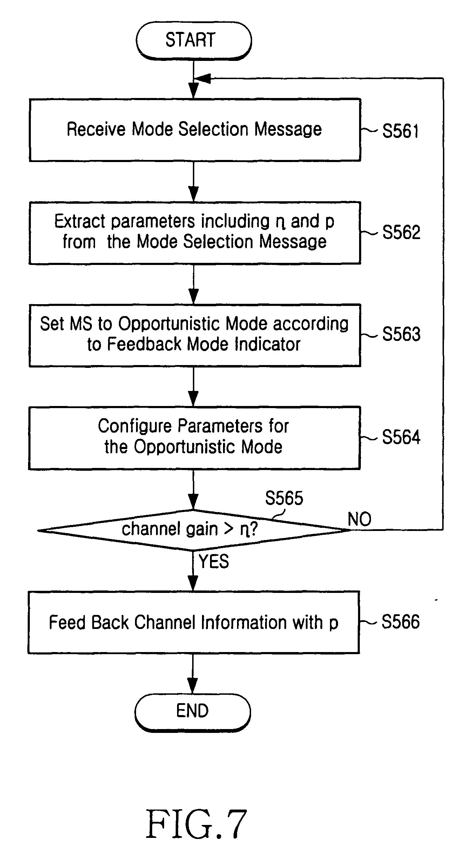

FIG. 7 is a flowchart illustrating a procedure of the opportunistic mode of FIG. 5 at each MS.

Referring to FIG. 7, once the MS receives the mode selection message from the BS at step S561, the MS extracts parameters such as a feedback mode indicator, η, and *p* from the mode selection message at step S562. Then the MS sets up itself for the opportunistic mode according to the feedback mode indicator at step S563 and configures parameters for the opportunistic mode at step S564. After completing the parameter configuration, the MS checks and compares its channel gain with the channel power threshold η and determines whether the channel gain is greater than η at step S565. If the channel gain is greater than η, the MS feeds back the channel information with the random feedback probability *p* at step S566. Otherwise, the algorithm goes back to the step S561. The parameters η and *p* may be received in other messages such as the feedback request messages, other than the mode selection message.

Even though the adaptive feedback method according to the above embodiment of the present invention has employed two feedback mechanisms, i.e., the opportunistic mode and the polling mode, the number and types of feedback mechanisms to be utilized are not limited.

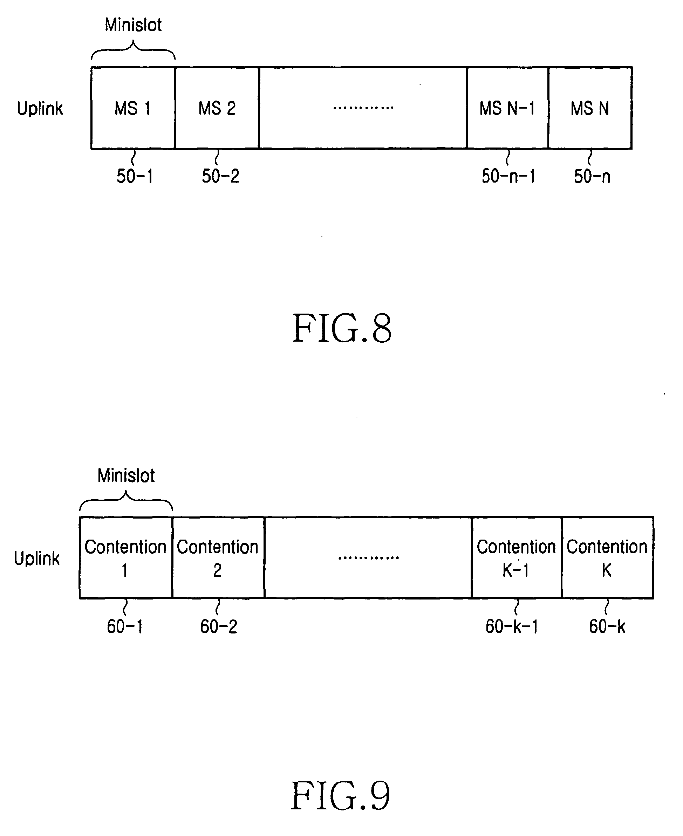

FIG. 8 is a block diagram illustrating a framing structure of a dedicated channel mode for the adaptive feedback method of the present invention.

When the number of MSs is smaller than the number of feedback mini-slots, the dedicated channel mode can be used. Each MS is associated with a fixed minislot to carry the channel information. Referring to FIG. 1 and FIG. 5, the mini-slots 50-1, 50-2, 50-n-1, and 50-n are associated with MSs 110, 120, 130, ..., 140, respectively.

FIG. 9 is a block diagram illustrating a framing structure of an opportunistic mode for the adaptive feedback method of the present invention.

In the opportunistic mode, the MSs feed back their channel information in the feedback mini-slots in a slotted ALOHA fashion, such that the MSs content to each other in every mini-slots 60-1, 60-2, ..., 60-k-1, and 60-k.

If multiple MSs feed back in the same minislot, a collision happens, which results in failure of the feedback attempt. When only one MS feeds back its channel information in a minislot, the feedback package will be successfully delivered to the BS. This mode is applicable to the scenario where there are many active MSs in the system (the number of active MSs "N" is much larger than the number of mini-slots "K"). The feedback control parameters are the channel power threshold η and the random feedback probability ρ.

In the opportunistic mode, first the BS initializes the parameters η and *p* according to the system and traffic information. The initial values of the parameters are taken from predefined lookup tables. With online implementation, these parameters can be tracked according to the evolution of the time series of the average throughput described above. The parameters are broadcasted to all the MSs in the broadcast messaging period before feedback mini-slots.

Upon receiving the parameters, each MS updates the setting of its local feedback controller with the received control message and collects the channel state information (CSI) measured by the receiving processor. The CSI includes channel power. The MS compares the channel power with the channel power threshold η. If the channel power is above the channel power threshold η, the MS (local feedback controller) decides whether to feed back the information to the BS with probability ρ. Otherwise, the BS does not feed back the information. If it is decided to feed back the channel information, the local feedback controller packages the channel state information into a feedback package and then feeds back the package to the BS. The packaging process involves quantization to the channel state and low rate error coding to protect the message.

The BS collects the feedback packages in each mini-slot if there is no collision. If there are multiple feedback packages from different MSs at the BS after the contention mini-slots, the BS randomly picks one MS. In the case that collision happens through all mini-slots, the BS randomly selects an MS and requests the MS to feed back the channel state information after feedback contention mini-slots to schedule the transmission. The channel state information is extracted from the feedback packages, and fed to the scheduler. The scheduler makes the scheduling decision based on the channel and traffic information.

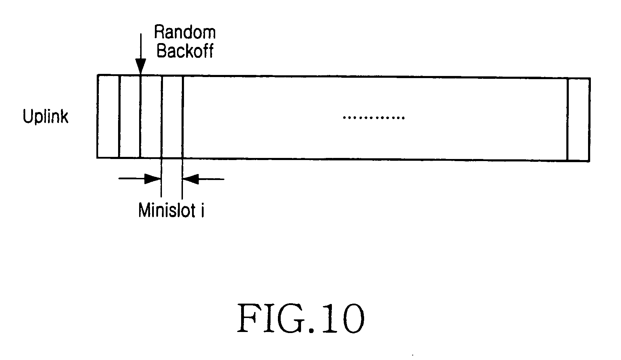

FIG. 10 is a block diagram illustrating a framing structure of a random backoff with carrier sensing mode for the adaptive feedback method of the present invention.

In the random backoff feedback mode, all the MSs are assumed to be able to sense the transmissions from any other MS. The random backoff feedback mode is applicable to a pico-cell scenario where the MSs are closely located to the BS and each other. Each MS randomly backoffs a number of mini-slots before attempting to access the feedback channel. While an MS backoffs, it also performs carrier sensing. If the MS senses that the medium is idle, i.e., no other MSs are using the feedback channel, its feedback package will be sent out. Otherwise, it continues the carrier sensing until the medium is idle. A collision may still happen due to the propagation delays of the packages. To lower the probability of collision, when an MS senses that the medium is idle, it attempts to access the medium with a probability $\rho$.

The number of backoff mini-slots is determined by the channel power. The relation between the backoff mini-slots and the channel power is determined offline, and it is stored in a backoff lookup table (BLT). The higher the channel power is, the smaller the backoff duration should be. The central feedback controller at the BS computes the relation between the channel power and the number of backoff mini-slots. Then the relation is broadcasted to the MSs in feedback control message. Each MS updates its local feedback controller with the received feedback control messages.

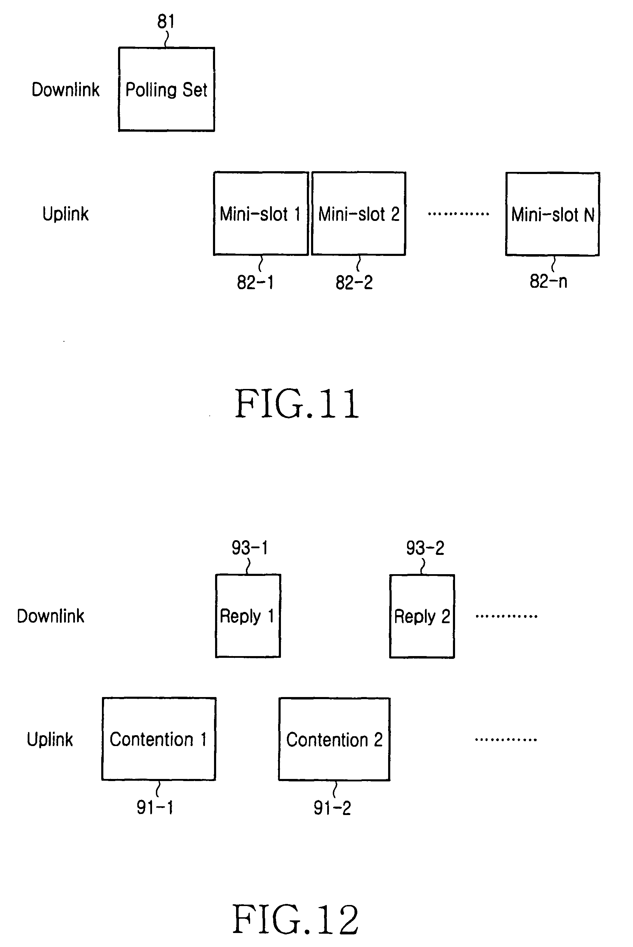

FIG. 11 is a block diagram illustrating a framing structure of a polling mode for the adaptive feedback method the present invention.

In the polling mode, the BS determines a set of MSs who should feed back their channel states based on the traffic and system information. The BS broadcasts the polling set message 81 to all the MSs. Upon receiving the polling set message 81, the MSs feed back their channel state information one by one in the mini-slots 82-1, 82-2, ..., and 82-n according to the order specified in the polling set message 81.

FIG. 12 is a block diagram illustrating a framing structure of a coordinated mode for the adaptive feedback method of the present invention.

In the coordinated mode, each mini-slot is decomposed into an uplink contention mini-slot 91-1 and 91-2 and a downlink reply mini-slot 93-1 and 93-2. All MSs randomly attempt to feed back in each uplink contention mini-slot in a slotted ALOHA fashion. The downlink sends back a reply message to all MSs to indicate the status of collision in the reply mini-slot 93-1 and 93-2. An interval that specifies the range of the channel power is used to trigger the feedback. The position and the range of the interval are dynamically adjusted at the central feedback controller based on the collision status. Such information is also broadcasted to all the MSs in the reply messages. If an MS finds that its channel power is inside the interval, it feeds back the channel station information to the BS. Otherwise, it does not perform feed back. By monitoring the collision status, the BS can dynamically adjust the interval until there is only one MS's channel power inside the interval, or declares a failure due to running out of the mini-slots. If no MS is found, the BS randomly polls an MS to request its feedback after the coordinated feedback mini-slots.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

As described above, since the adaptive feedback method of the present invention changes the feedback mechanism adaptively to the system environment, it is possible to increase the system throughput as well as decrease the MAC overhead regardless of the variation of the number of MSs.

Also, the adaptive feedback method of the present invention selects a feedback mode suited for the traffic and system environments so as to efficiently collect the channel information, resulting in improvement of the scheduling reliability.

**Claims**

1. An adaptive feedback method for a cellular communication system having plural terminals feeding back channel information to an access point, comprising:

   selecting one of at least two feedback modes on the basis of system parameters, wherein the feedback modes defines how feedback resources are allocated to the plural terminals;
   setting the access point and the terminals for the selected feedback mode; and
   feeding back the channel information from the terminals to the access point in the selected feedback mode.

2. The method of claim 1, wherein the step of setting the access point and the terminals includes:

   optimizing control parameters associated with the selected feedback mode.

3. The method of claim 1 or 2, wherein the feedback modes include an opportunistic mode and a polling mode.

4. The method of claim 1 or 2, wherein the feedback modes include a dedicated channel mode, an opportunistic mode, a random backoff with carrier sensing mode, a polling mode, and a coordinated mode.

5. The method of any of claims 1 to 4, wherein the step of selecting a feedback mode includes:

   analyzing the system parameters;
   computing a mode selection parameter from the system parameters
   comparing the mode selection parameter with at least one predetermined threshold; and
   selecting a feedback mode based on the comparison result.

6. The method of claim 3, wherein the step of selecting the feedback mode includes:

   collecting the system parameters;
   computing a mode selection parameter from the system parameters;
   comparing the mode selection parameter with a predetermined threshold; and
   selecting the opportunistic mode if the mode selection parameter is greater than or equal to the threshold; and
   selecting the polling mode, if the mode selection parameter is less than the threshold.

7. The method of claims 5 or 6, wherein the system parameters include a number of terminals 'N' and a number of mini-slots 'K' carrying the channel information.

8. The method of claim 7, wherein the mode selection parameter is calculated according to $Q = N - \alpha K$, where $\alpha$ is a tradeoff parameter for determining a switching point between the feedback modes.

9. The method of claim 2, wherein the control parameters include a channel power threshold $\eta$ and a random feedback probability $p$.

10. The method of claim 9, wherein the step of optimizing the control parameters for the opportunistic mode includes:

    calculating a mean sum rate of all the terminals;
    determining the channel power threshold $\eta$ and the random feedback probability $p$ to maximize the mean sum rate.

11. The method of claim 10, wherein the mean sum rate is calculated according to

$$C(p,\eta) = \sum_{j=1}^{N} E_{(\chi_j, S_j, T)}[\log_2(1 + \rho\chi_j)I\{S_j = 1\}]$$

where $\chi_j$ is the channel power of a $j^{th}$ terminal, denoted by $\chi_j = |h_j|^2$, $S_j$ is an event that the $j^{th}$ terminal is selected at the access point, $T$ is the number of terminals whose channel powers are above the channel power threshold $\eta$, $\rho$ is the average signal-to-noise ratio (SNR), and $I\{\cdot\}$ is an indicator function.

12. The method of claim 11, wherein the channel power threshold $\eta$ and the random feedback probability $p$ are determined according to:

$$\max_{p,\eta} C(p,\eta)$$
$$s.t. \quad 0 \le p \le 1, \quad \eta \ge 0$$

**13.** The method of claim 12, wherein the step of feeding back the channel information includes:

determining, at each terminal, whether a channel gain of the terminal is greater than the channel power threshold η; and
feeding back the channel information with the random feedback probability $p$ when the channel gain of the terminal is greater than the channel power threshold η.

**14.** An adaptive feedback system for cellular communication comprising:

an access point (100) arranged to select one of at least two feedback modes on the basis of a mode selection parameter derived from system parameters; and
a plurality of mobile stations (110-140), each arranged for feeding back channel information based on the selected feedback mode,

wherein the feedback modes define how feedback resources are allocated to the plurality of mobile stations.

**15.** The system of claim 14, wherein the access point (100) includes:

a scheduler (103) arranged to schedule services to the mobile stations (110-140) and to determine service rates based on the channel information and traffic information associated with the services; and
a central feedback controller (105) arranged to generate a feedback control signal for controlling the selected feedback mode.

**16.** The system of claim 15, wherein the central feedback controller (105) includes:

a mode selector (107) arranged to compare the mode selection parameter with a threshold value and to select the feedback mode on the basis of a comparison result; and
an optimizer (109) arranged to dynamically optimize control parameters associated with the feedback mode selected by the mode selector (107).

**17.** The system of claim 16, wherein the mode selection parameter is derived from a number of terminals 'N' and a number of mini-slots 'K' carrying the channel information.

**18.** The system of claim 17, wherein the mode selection parameter is calculated according to $Q = N - \alpha K$, where $\alpha$ is a tradeoff parameter for determining a switching point between the feedback modes.

**19.** The system of claim 18, wherein the control parameters includes a channel power threshold η and a random feedback probability $p$.

**20.** The system of claim 19, wherein the optimizer (109) is arranged to optimize the control parameters to maximize a system throughput.

**21.** The system of claim 20, wherein the system throughput is indicated by a mean sum rate of all mobile stations.

**22.** The system of claim 21, wherein the optimizer is arranged to select the channel power threshold η and the random feedback probability $p$ which maximize the mean sum rate, as optimal control parameters.

**23.** The system of claim 22, wherein the mean sum rate is calculated according to:

$$C(p,\eta) = \sum_{j=1}^{N} E_{(\chi_j, S_j, T)}[\log_2(1 + \rho\chi_j)I\{S_j = 1\}]$$

where $\chi_j$ is the channel power of a $j^{th}$ terminal, denoted by $\chi_j = |h_j|^2$, $S_j$ is an event that the $j^{th}$ terminal is selected at the access point, $T$ is the number of terminals whose channel powers are above the channel power threshold $\eta$, $\rho$ is the average signal-to-noise ratio (SNR), and $I\{\cdot\}$ is an indicator function.

24. The system of claim 23, wherein the optimal control parameters are determined according to:

$$\max_{p,\eta} C(p,\eta)$$
$$s.t. \ \ 0 \leq p \leq 1, \ \ \eta \geq 0$$

25. The system of claim 15, wherein the mobile stations (110-140) include:

   a receiving processor (150) arranged to measure channel status and to generate channel information; and
   a local feedback controller (170) arranged to adjust a feedback setting based on the feedback control signal received from the access point (100) and to feed back the channel information with the feedback settings.

26. The system of claim 25, wherein the local feedback controller (170) includes:

   a local mode selector (173) arranged to select the feedback mode based on the feedback control signal from the access point (100); and
   a parameter selector (175) arranged to select parameters to be utilized for the selected feedback mode and feeds back the channel information with the selected parameter on the feedback settings.

27. An access node (100) of a cellular communication system including plural access nodes operating with one of at least two feedback modes selected on the basis of a mode selection parameter derived from system parameters and a plurality of mobile stations (110-140) feeding back channel information according to the selected feedback mode, wherein the feedback modes define how feedback resources are allocated to the plurality of mobile stations, comprising:

   a scheduler (103) arranged to schedule services for the mobile stations and to decide a service rate on the basis of the channel information and traffic information with the respect to the services;
   a central feedback controller (105) arranged to generate feedback control signals for controlling the selected feedback mode.

28. The access node of claim 27, wherein the central feedback controller (105) includes:

   a mode selector (107) arranged to select the feedback mode by comparing the mode selection parameter with a threshold; and
   an optimizer (109) arranged for optimizing the feedback mode selected by the mode selector (107) and the control parameters.

29. The access node of claim 28, wherein the mode selection parameter is selected on the basis of a number of mobile stations (110-140) and a number of mini slots carrying the channel information.

30. The access node of claim 29, wherein the mode selection parameter is calculated according to $Q = N - \alpha K$, where Q is the selection parameter, N is the number of mobile stations (110-140), K is the number of minislots, and $\alpha$ is a tradeoff parameter for deciding a mode switching point.

31. The access node of claim 30, wherein the control parameter includes a channel power threshold $\eta$ and a random feedback probability $p$.

**32.** The access node of claim 31, wherein the optimizer (109) is arranged to optimize the selected feedback mode for maximizing system throughput.

**33.** The access node of claim 32, wherein the system throughput is a mean sum rate of the mobile terminals (110-140).

**34.** The access node of claim 33, wherein the optimizer (109) is arranged to select the channel power threshold and the random feedback probability maximizing the mean sum rate as the optimal control parameters.

**35.** The access node of claim 34, wherein the mean sum rate is calculated according to:

$$C(p,\eta) = \sum_{j=1}^{N} E_{(\chi_j, S_j, T)}[\log_2(1+\rho\chi_j)I\{S_j = 1\}],$$

where where $\chi_j$ is the channel power of a is terminal, denoted by $\chi_j = |h_j|^2$, $S_j$ is an event that the $j^{th}$ terminal is selected at the access point, $T$ is the number of terminals whose channel powers are above the channel power threshold $\eta$, $\rho$ is the average signal-to-noise ratio (SNR), and $I\{\cdot\}$ is an indicator function.

**36.** The access node of claim 35, wherein the channel power threshold $\eta$ and the feedback probability $\rho$ are determined according to

$$\max_{p,\eta} C(p,\eta)$$
$$s.t. \ \ 0 \le p \le 1, \ \ \eta \ge 0.$$

**37.** A mobile terminal (110-140) of a cellular communication system including plural access nodes operating with one of at least two feedback modes selected on the basis of a mode selection parameter derived from system parameters and a plurality of mobile stations feeding back channel information according to the selected feedback mode wherein the feedback modes define how feedback resources are allocated to the plurality of mobile stations, comprising:

a reception processor (150) arranged to generate channel information by measuring channel states; and
a feedback controller (120) arranged to adjust a feedback configuration according to feedback control signals received from the access node (100) and to feed back the channel information together with the feedback configuration.

**38.** The mobile terminal of claim 37, wherein the feedback controller (170) includes:

a mode selector (173) arranged to select a feedback mode on the basis of the feedback control signal; and
a parameter selector (175) arranged to select parameters to be used for the selected feedback mode and to feed back the selected parameters as the channel information.

**Patentansprüche**

**1.** Adaptives Rückführverfahren für ein zellulares Kommunikationssystem, das eine Vielzahl von Endstellen aufweist, die Kanalinformationen zu einem Zugriffspunkt rückführen, wobei es umfasst:

Auswählen eines von wenigstens zwei Rückführ-Modi auf Basis von Systemparametern, wobei die Rückführ-Modi definieren, wie Rückführressourcen den mehreren Endstellen zugewiesen werden;

Einstellen des Zugangspunktes und der Endstellen für den ausgewählten Rückführ-Modus; und
Rückführen der Kanalinformationen von den Endstellen zu dem Zugriffspunkt in dem ausgewählten Rückführ-Modus.

**2.** Verfahren nach Anspruch 1, wobei der Schritt des Einstellens des Zugriffspunktes und der Endstellen einschließt:

Optimieren von Steuerparametern, die mit dem ausgewählten Rückführ-Modus verbunden sind.

**3.** Verfahren nach Anspruch 1 oder 2, wobei die Rückführ-Modi einen opportunistischen Modus und einen Polling-Modus einschließen.

**4.** Verfahren nach Anspruch 1 oder 2, wobei die Rückführ-Modi einen Dedicated-Channel-Modus, einen opportunistischen Modus, einen Random-Backoff-Modus mit Trägermessung, einen Polling-Modus und einen koordinierten Modus einschließen.

**5.** Verfahren nach einem der Ansprüche 1 bis 4, wobei der Schritt des Auswählens eines Rückführ-Modus einschließt:

Analysieren der Systemparameter;
Berechnen eines Modus-Auswählparameters aus den Systemparametem;
Vergleichen des Modus-Auswählparameters mit wenigstens einem vorgegebenen Schwellenwert; und
Auswählen eines Rückführ-Modus auf Basis des Vergleichsergebnisses.

**6.** Verfahren nach Anspruch 3, wobei der Schritt des Auswählens des Rückführ-Modus einschließt:

Sammeln der Systemparameter;
Berechnen eines Modus-Auswählparameters aus den Systemparametern;
Vergleichen des Modus-Auswählparameters mit einem vorgegebenen Schwellenwert; und
Auswählen des opportunistischen Modus, wenn der Modus-Auswählparameter größer ist als oder genau so groß ist wie der Schwellenwert; und
Auswählen des Polling-Modus, wenn der Modus-Auswählparameter kleiner ist als der Schwellenwert.

**7.** Verfahren nach den Ansprüchen 5 oder 6, wobei die Systemparameter eine Anzahl "N" von Endgeräten und eine Anzahl "K" von Mini-Schlitzen einschließen, die die Kanalinformationen tragen.

**8.** Verfahren nach Anspruch 7, wobei der Modus-Auswählparameter gemäß $Q = N - \alpha K$ berechnet wird und $\alpha$ ein Kompromiss-Parameter (tradeoff parameter) zum Bestimmen eines Umschaltpunktes zwischen den Rückführ-Modi ist.

**9.** Verfahren nach Anspruch 2, wobei die Steuerparameter einen Kanalleistungs-Schwellenwert $\eta$ und eine Zufalls-Rückführwahrscheinlichkeit $\rho$ einschließen.

**10.** Verfahren nach Anspruch 9, wobei der Schritt des Optimierens der Steuerparameter für den opportunistischen Modus einschließt:

Berechnen einer mittleren Summenrate aller Endgeräte;
Bestimmen des Kanalleistungs-Schwellenwertes $\eta$ und der Zufalls-Rückführwahrscheinlichkeit $\rho$, um die durchschnittliche Summenrate zu maximieren.

**11.** Verfahren nach Anspruch 10, wobei die durchschnittliche Summenrate gemäß

$$C(p,\eta) = \sum_{j=1}^{N} E_{(\chi_j, S_j, T)}[\log_2(1 + \rho\chi_j)I\{S_j = 1\}]$$

berechnet wird, wobei $\chi_j$ die Kanalleistung eines *j-ten* Endgerätes ist, die mit $\chi_j = |h_j|^2$ bezeichnet wird, $S_j$ ein Ereignis dahingehend ist, dass das *j-te* Endgerät an dem Zugriffspunkt ausgewählt wird, $T$ die Anzahl von Endgeräten ist, deren Kanalleistungen über dem Kanalleistungs-Schwellenwert $\eta$ liegen, $\rho$ das durchschnittliche Signal-Rausch-Verhältnis (SNR) ist und $I\{\cdot\}$ eine Indikatorfunktion ist.

**12.** Verfahren nach Anspruch 11, wobei der Kanalleistungs-Schwellenwert $\eta$ und die Zufalls-Rückführwahrscheinlichkeit $\rho$ gemäß

$$\max_{p,\eta} C(p,\eta)$$
$$s.t. \quad 0 \le p \le 1, \quad \eta \ge 0$$

bestimmt werden.

13. Verfahren nach Anspruch 12, wobei der Schritt des Rückführens der Kanalinformationen einschließt:

an jedem Endgerät Bestimmen, ob eine Kanalverstärkung des Endgerätes größer ist als der Kanalleistungs-Schwellenwert $\eta$; und
Rückführen der Kanalinformationen mit der Zufalls-Rückführwahrscheinlichkeit $\rho$, wenn die Kanalverstärkung des Endgerätes größer ist als der Kanalleistungs-Schwellenwert $\eta$.

14. System adaptiver Rückführung für zellulare Kommunikation, das umfasst:

einen Zugriffspunkt (100), der so eingerichtet ist, dass er einen von wenigstens zwei Rückführ-Modi auf Basis eines Modus-Auswählparameters auswählt, der aus Systemparametern hergeleitet wird; und
eine Vielzahl von Mobilstationen (110-140), die jeweils so eingerichtet sind, dass sie Kanalinformationen auf Basis des ausgewählten Rückführ-Modus rückführen,

wobei die Rückführ-Modi definieren, wie Rückführ-Ressourcen der Vielzahl von Mobilstationen zugewiesen werden.

15. System nach Anspruch 14, wobei der Zugriffspunkt (100) enthält:

einen Scheduler (103), der so eingerichtet ist, dass er Dienste für die Mobilstationen (110-140) einteilt und Dienstraten auf Basis der Kanalinformationen und Verkehrsinformationen bestimmt, die mit den Diensten verbunden sind; und
eine zentrale Rückführ-Steuereinheit (105), die so eingerichtet ist, dass sie ein Rückführ-Steuersignal zum Steuern des ausgewählten Rückführ-Modus erzeugt.

16. System nach Anspruch 15, wobei die zentrale Rückführ-Steuereinheit (105) enthält:

eine Modus-Auswähleinrichtung (107), die so eingerichtet ist, dass sie den Modus-Auswählparameter mit einem Schwellenwert vergleicht und den Rückführ-Modus auf Basis eines Vergleichsergebnisses auswählt; und
eine Optimiereinrichtung (109), die so eingerichtet ist, dass sie Steuerparameter, die mit dem durch die Modus-Auswähleinrichtung (107) ausgewählten Rückführ-Modus verbunden sind, dynamisch optimiert.

17. System nach Anspruch 16, wobei der Modus-Auswählparameter von einer Anzahl "N" von Endgeräten und einer Anzahl "K" von Mini-Schlitzen, die die Kanalinformationen tragen, hergeleitet wird.

18. System nach Anspruch 17, wobei der Modus-Auswählparameter gemäß $Q = N - \alpha K$ berechnet wird, und $\alpha$ ein Kompromiss-Parameter zum Bestimmen eines Umschaltpunktes zwischen den Rückführ-Modi ist.

19. System nach Anspruch 18, wobei die Steuerparameter einen Kanalleistungs-Schwellenwert $\eta$ und eine Zufalls-Rückführwahrscheinlichkeit $\rho$ einschließen.

20. System nach Anspruch 19, wobei die Optimiereinrichtung (109) so eingerichtet ist, dass sie die Steuerparameter optimiert, um einen Systemdurchsatz zu maximieren.

21. System nach Anspruch 8, wobei der Systemdurchsatz durch eine durchschnittliche Summenrate aller Mobilstationen angezeigt wird.

22. System nach Anspruch 21, wobei die Optimiereinrichtung so eingerichtet ist, dass sie den Kanalleistungs-Schwellenwert $\eta$ und die Zufalls-Rückführwahrscheinlichkeit $\rho$, die die durchschnittliche Summenrate maximieren, als optimale Steuerparameter auswählt.

**23.** System nach Anspruch 22, wobei die durchschnittliche Summenrate gemäß

$$C(p,\eta) = \sum_{j=1}^{N} E_{(\chi_j, s_j, T)}[\log_2(1 + \rho\chi_j)I\{S_j = 1\}]$$

berechnet wird, wobei $\chi_j$ die Kanalleistung eines *j-ten* Endgerätes ist, die mit $\chi_j = |h_j|^2$ bezeichnet wird, $S_j$ ein Ereignis dahingehend ist, dass das *j-te* Endgerät an dem Zugriffspunkt ausgewählt wird, $T$ die Anzahl von Endgeräten ist, deren Kanalleistungen über dem Kanalleistungs-Schwellenwert $\eta$ liegen, $\rho$ das durchschnittliche Signal-Rausch-Verhältnis (SNR) ist und $I\{\cdot\}$ eine Indikatorfunktion ist.

**24.** System nach Anspruch 23, wobei die optimalen Steuerparameter gemäß

$$\max_{p,\eta} C(p,\eta)$$
$$s.t. \quad 0 \le p \le 1, \quad \eta \ge 0$$

bestimmt werden.

**25.** System nach Anspruch 15, wobei die Mobilstationen (110-140) enthalten:

einen empfangenden Prozessor (150), der so eingerichtet ist, dass er den Kanalstatus misst und Kanalinformationen erzeugt; und
eine lokale Rückführ-Steuereinheit (170), die so eingerichtet ist, dass sie eine Rückführ-Einstellung auf Basis des von dem Zugriffspunkt (100) empfangenen Rückführ-Steuersignals einstellt und die Kanalinformationen mit den Rückführ-Einstellungen rückführt.

**26.** System nach Anspruch 25, wobei die lokale Rückführ-Steuereinheit (170) enthält:

eine lokale Modus-Auswähleinrichtung (173), die so eingerichtet ist, dass sie den Rückführ-Modus auf Basis des Rückführ-Steuersignals von dem Zugriffspunkt (100) auswählt; und
eine Parameter-Auswähleinrichtung (175), die so eingerichtet ist, dass sie für den ausgewählten Rückführ-Modus zu verwendende Parameter auswählt und die Kanalinformationen mit dem ausgewählten Parameter über die Rückführ-Einstellungen zurückführt.

**27.** Zugriffsknoten (100) eines zellularen Kommunikationssystems, das mehrere Zugriffsknoten, die mit einem von wenigstens zwei Rückführ-Modi arbeiten, die auf Basis eines Modus-Auswählparameters ausgewählt werden, der von Systemparametern hergeleitet wird, sowie eine Vielzahl von Mobilstationen (110-140) enthält, die Kanalinformationen gemäß dem ausgewählten Rückführ-Modus rückführen, wobei die Rückführ-Modi definieren, wie Rückführ-Ressourcen der Vielzahl von Mobilstationen zugewiesen werden, und wobei er umfasst:

einen Scheduler (103), der so eingerichtet ist, dass er Dienste für die Mobilstationen einteilt und eine Dienstrate auf Basis der Kanalinformationen und von Verkehrsinformationen bezüglich der Dienste festlegt;
eine zentrale Rückführ-Steuereinheit (105), die so eingerichtet ist, dass sie Rückführ-Steuersignale zum Steuern des ausgewählten Rückführ-Modus erzeugt.

**28.** Zugriffsknoten nach Anspruch 27, wobei die zentrale Rückführ-Steuereinheit (105) enthält:

eine Modus-Auswähleinrichtung (107), die so eingerichtet ist, dass sie den Rückführ-Modus durch Vergleichen des Modus-Auswählparameters mit einem Schwellenwert auswählt; und
eine Optimiereinrichtung (109), die so eingerichtet ist, dass sie den durch die Modus-Auswähleinrichtung (107) ausgewählten Rückführ-Modus und die Steuerparameter optimiert.

**29.** Zugriffsknoten nach Anspruch 28, wobei der Modus-Auswählparameter auf Basis einer Anzahl von Mobilstationen (110-140) und einer Anzahl von Mini-Schlitzen, die die Kanalinformationen tragen, ausgewählt wird.

**30.** Zugriffsknoten nach Anspruch 29, wobei der Modus-Auswählparameter gemäß $Q = N - \alpha K$ berechnet wird, wobei Q der Auswählparameter ist, N die Anzahl von Mobilstationen (110-140) ist, K die Anzahl von Mini-Schlitzen ist und $\alpha$ ein Kompromiss-Parameter zum Festlegen eines Modus-Umschaltpunktes ist.

**31.** Zugriffsknoten nach Anspruch 30, wobei die Steuerparameter einen Kanalleistungs-Schwellenwert $\eta$ und eine Zufalls-Rückführwahrscheinlichkeit $\rho$ einschließen.

**32.** Zugriffsknoten nach Anspruch 31, wobei die Optimiereinrichtung (109) so eingerichtet ist, dass sie den ausgewählten Rückführ-Modus optimiert, um Systemdurchsatz zu maximieren.

**33.** Zugriffsknoten nach Anspruch 32, wobei der Systemdurchsatz eine durchschnittliche Summenrate der Mobil-Endgeräte (110-140) ist.

**34.** Zugriffsknoten nach Anspruch 33, wobei die Optimiereinrichtung (109) so eingerichtet ist, dass sie den Kanalleistungs-Schwellenwert und die Zufalls-Rückführwahrscheinlichkeit, die die durchschnittliche Summenrate maximieren, als die optimalen Steuerparameter auswählt.

**35.** Zugriffsknoten nach Anspruch 34, wobei die durchschnittliche Summenrate gemäß

$$C(p,\eta) = \sum_{j=1}^{N} E_{(\chi_j, S_j, T)}[\log_2(1 + \rho\chi_j)I\{S_j = 1\}]$$

berechnet wird, wobei $\chi_j$ die Kanalleistung eines *j-ten* Endgerätes ist, die mit $\chi_j = |h_j|^2$ bezeichnet wird, $S_j$ ein Ereignis dahingehend ist, dass das *j-te* Endgerät an dem Zugriffspunkt ausgewählt wird, $T$ die Anzahl von Endgeräten ist, deren Kanalleistungen über dem Kanalleistungs-Schwellenwert $\eta$ liegen, $\rho$ das durchschnittliche Signal-Rausch-Verhältnis (SNR) ist, und $I\{\bullet\}$ eine Indikatorfunktion ist.

**36.** Zugriffsknoten nach Anspruch 35, wobei der Kanalleistungs-Schwellenwert $\eta$ und die Rückführwahrscheinlichkeit $\rho$ gemäß

$$\max_{p,\eta} C(p,\eta)$$
$$s.t. \quad 0 \le p \le 1, \quad \eta \ge 0$$

bestimmt werden.

**37.** Mobil-Endgerät (110-140) eines zellularen Kommunikationssystems, das mehrere Zugriffsknoten, die mit einem von wenigstens zwei Rückführ-Modi arbeiten, die auf Basis eines von Systemparametern hergeleiteten Modus-Auswählparameters ausgewählt werden, und eine Vielzahl von Mobilstationen enthält, die Kanalinformationen gemäß dem ausgewählten Rückführ-Modus rückführen, wobei die Rückführ-Modi definieren, wie Rückführ-Ressourcen der Vielzahl von Mobilstationen zugewiesen werden, wobei es umfasst:

einen Empfangsprozessor (150), der so eingerichtet ist, dass er Kanalinformationen durch Messen von Kanalzuständen erzeugt; und
eine Rückführ-Steuereinheit (170), die so eingerichtet ist, dass sie eine Rückführ-Konfiguration gemäß Rückführ-Steuersignalen konfiguriert, die von dem Zugriffsknoten (100) empfangen werden, und die Kanalinformationen zusammen mit der Rückführkonfiguration rückführt.

**38.** Mobil-Endgerät nach Anspruch 37, wobei die Rückführ-Steuereinheit (170) enthält:

eine Modus-Auswähleinrichtung (173), die so eingerichtet ist, dass sie einen Rückführ-Modus auf Basis des Rückführ-Steuersignals auswählt; und

eine Parameter-Auswähleinrichtung (175), die so eingerichtet ist, dass sie für den ausgewählten Rückführ-Modus zu verwendende Parameter auswählt, und die ausgewählten Parameter als die Kanalinformationen rückführt.

## Revendications

1. Procédé de contre-réaction adaptative pour un système de communication cellulaire comptant une pluralité de terminaux renvoyant des informations de canal à un point d'accès, comprenant les étapes consistant à :

sélectionner l'un d'au moins deux modes de contre-réaction sur la base de paramètres du système, les modes de contre-réaction définissant comment des ressources de contre-réaction sont attribuées à la pluralité de terminaux ;
paramétrer le point d'accès et les terminaux pour le mode de contre-réaction sélectionné ; et
renvoyer les informations de canal entre les terminaux et le point d'accès dans le mode de contre-réaction sélectionné.

2. Procédé selon la revendication 1, dans lequel l'étape de paramétrage du point d'accès et des terminaux comprend l'étape consistant à :

optimiser des paramètres de commande associés au mode de contre-réaction sélectionné.

3. Procédé selon la revendication 1 ou 2, dans lequel les modes de contre-réaction comprennent un mode opportuniste et un mode de scrutation.

4. Procédé selon la revendication 1 ou 2, dans lequel les modes de contre-réaction comprennent un mode de canal spécialisé, un mode opportuniste, un mode à temps d'attente aléatoire avec détection de porteuse, un mode de scrutation et un mode coordonné.

5. Procédé selon l'une quelconque des revendications 1 à 4, dans lequel l'étape de sélection d'un mode de contre-réaction comprend les étapes consistant à :

analyser les paramètres du système ;
calculer un paramètre de sélection de mode à partir des paramètres du système ;
comparer le paramètre de sélection de mode avec au moins un seuil prédéterminé ; et
sélectionner un mode de contre-réaction sur la base du résultat de la comparaison.

6. Procédé selon la revendication 3, dans lequel l'étape de sélection du mode de contre-réaction comprend les étapes consistant à :

collecter les paramètres du système ;
calculer un paramètre de sélection de mode à partir des paramètres du système ;
comparer le paramètre de sélection de mode avec un seuil prédéterminé ;
sélectionner le mode opportuniste si le paramètre de sélection de mode est supérieur ou égal au seuil ; et
sélectionner le mode de scrutation si le paramètre de sélection de mode est inférieur au seuil.

7. Procédé selon la revendication 5 ou 6, dans lequel les paramètres du système comprennent un nombre de terminaux N et un nombre de mini-intervalles de temps K transportant les informations de canal.

8. Procédé selon la revendication 7, dans lequel le paramètre de sélection de mode est calculé d'après $Q = N - \alpha K$, où $\alpha$ est un paramètre de compromis pour déterminer un point de commutation entre les modes de contre-réaction.

9. Procédé selon la revendication 2, dans lequel les paramètres de commande comprennent un seuil de puissance du canal $\eta$ et une probabilité de contre-réaction aléatoire p.

10. Procédé selon la revendication 9, dans lequel l'étape d'optimisation des paramètres de commande pour le mode opportuniste comprend les étapes consistant à :

calculer un débit total moyen de tous les terminaux ;
déterminer le seuil de puissance de canal η et la probabilité de contre-réaction aléatoire p afin de maximiser le débit total moyen.

**11.** Procédé selon la revendication 10, dans lequel le débit total moyen est calculé à l'aide de

$$C(p,\eta) = \sum_{j=1}^{N} E_{(\chi_j, S_j, T)}[\log_2(1 + \rho \chi_j) I\{S_j = 1\}]$$

où $\chi_j$ est la puissance de canal d'un $j^{ème}$ terminal, notée $\chi_j = |h_j|^2$, $S_j$ est un événement de sélection du $j^{ème}$ terminal au niveau du point d'accès, T est le nombre de terminaux dont les puissances de canal sont au-dessus du seuil de puissance de canal η, ρ est le rapport moyen signal sur bruit et I{·} est une fonction indicatrice.

**12.** Procédé selon la revendication 11, dans lequel le seuil de puissance de canal η et la probabilité de contre-réaction aléatoire p sont déterminés par

$$\max_{p,\eta} C(p, \eta)$$
$$\text{pour } 0 \leq p \leq 1, \eta \geq 0.$$

**13.** Procédé selon la revendication 12, dans lequel l'étape de renvoi des informations de canal comprend les étapes consistant à :

déterminer sur chaque terminal si un gain de canal du terminal est supérieur au seuil de puissance de canal η ; et
renvoyer les informations de canal avec la probabilité de contre-réaction aléatoire p si le gain de canal du terminal est supérieur au seuil de puissance de canal η.

**14.** Système de contre-réaction adaptative pour la communication cellulaire, comprenant :

un point d'accès (100) conçu pour sélectionner l'un d'au moins deux modes de contre-réaction sur la base d'un paramètre de sélection de mode dérivé de paramètres du système ; et
une pluralité de stations mobiles (110 à 140), chacune étant conçue pour renvoyer des informations de canal sur la base du mode de contre-réaction sélectionné,

les modes de contre-réaction définissant comment des ressources de contre-réaction sont attribuées à la pluralité de stations mobiles.

**15.** Système selon la revendication 14, dans lequel le point d'accès (100) comprend :

un ordonnanceur (103), conçu pour ordonnancer des services vers les stations mobiles (110 à 140) et pour déterminer des débits de service sur la base des informations de canal et des informations de trafic associées aux services ; et
un dispositif de commande central de contre-réaction (105), conçu pour produire un signal de commande de contre-réaction afin de commander le mode de contre-réaction sélectionné.

**16.** Système selon la revendication 15, dans lequel le dispositif de commande central de contre-réaction (105) comprend :

un sélecteur de mode (107), conçu pour comparer le paramètre de sélection de mode avec une valeur de seuil et pour sélectionner le mode de contre-réaction sur la base d'un résultat de la comparaison ; et
un optimiseur (109), conçu pour optimiser dynamiquement des paramètres de commande associés au mode de contre-réaction sélectionné par le sélecteur de mode (107).

**17.** Système selon la revendication 16, dans lequel le paramètre de sélection de mode est dérivé d'un nombre de terminaux N et d'un nombre de mini-intervalles de temps K transportant les informations de canal.

**18.** Système selon la revendication 17, dans lequel le paramètre de sélection de mode est calculé d'après Q = N - αK, où α est un paramètre de compromis pour déterminer un point de commutation entre les modes de contre-réaction.

**19.** Système selon la revendication 18, dans lequel les paramètres de commande comprennent un seuil de puissance de canal η et une probabilité de contre-réaction aléatoire p.

**20.** Système selon la revendication 19, dans lequel l'optimiseur (109) est conçu pour optimiser les paramètres de commande afin de maximiser le débit du système.

**21.** Système selon la revendication 20, dans lequel le débit du système est indiqué par un débit total moyen de toutes les stations mobiles.

**22.** Système selon la revendication 21, dans lequel l'optimiseur est conçu pour sélectionner le seuil de puissance de canal η et la probabilité de contre-réaction aléatoire p afin de maximiser le débit total moyen, ce qui constitue des paramètres de commande optimaux.

**23.** Système selon la revendication 22, dans lequel le débit total moyen est calculé à l'aide de

$$C(p,\eta) = \sum_{j=1}^{N} E_{(\chi_j, S_j, T)}[\log_2(1 + \rho\chi_j)I\{S_j = 1\}]$$

où $\chi_j$ est la puissance de canal d'un $j^{\text{ème}}$ terminal, notée $\chi_j = |h_j|^2$, $S_j$ est un événement de sélection du $j^{\text{ème}}$ terminal au niveau du point d'accès, T est le nombre de terminaux dont les puissances de canal sont au-dessus du seuil de puissance de canal η, ρ est le rapport moyen signal sur bruit et I{·} est une fonction indicatrice.

**24.** Système selon la revendication 23, dans lequel les paramètres de commande optimaux sont déterminés d'après

$$\max_{p,\eta} C(p, \eta)$$
$$\text{pour } 0 \leq p \leq 1, \eta \geq 0.$$

**25.** Système selon la revendication 15, dans lequel les stations mobiles (110 à 140) comprennent :

un processeur de réception (150), conçu pour mesurer l'état du canal et pour produire des informations de canal ; et
un dispositif de commande local de contre-réaction (170), conçu pour ajuster un paramétrage de la contre-réaction sur la base du signal de commande de contre-réaction reçu du point d'accès (100) et pour renvoyer les informations de canal avec les paramètres de contre-réaction.

**26.** Système selon la revendication 25, dans lequel le dispositif de commande local de contre-réaction (170) comprend :

un sélecteur local de mode (173), conçu pour sélectionner le mode de contre-réaction sur la base du signal de commande de contre-réaction provenant du point d'accès (100) ; et
un sélecteur de paramètres (175), conçu pour sélectionner des paramètres à utiliser pour le mode de contre-réaction sélectionné et pour renvoyer les informations de canal avec le paramètre sélectionné dans le paramétrage de la contre-réaction.

**27.** Noeud d'accès (100) d'un système de communication cellulaire comprenant une pluralité de noeuds d'accès, fonctionnant selon l'un d'au moins deux modes de contre-réaction, sélectionné sur la base d'un paramètre de sélection de mode dérivé de paramètres du système, et une pluralité de stations mobiles (110 à 140), renvoyant des informations de canal en fonction du mode de contre-réaction sélectionné, les modes de contre-réaction définissant comment des ressources de contre-réaction sont attribuées à la pluralité de stations mobiles, comprenant :

un ordonnanceur (103), conçu pour ordonnancer des services vers les stations mobiles et pour déterminer un débit de service sur la base des informations de canal et des informations de trafic associées aux services ; et un dispositif de commande central de contre-réaction (105), conçu pour produire un signal de commande de contre-réaction afin de commander le mode de contre-réaction sélectionné.

28. Noeud d'accès selon la revendication 27, dans lequel le dispositif de commande central de contre-réaction (105) comprend :

un sélecteur de mode (107), conçu pour sélectionner le mode de contre-réaction en comparant le paramètre de sélection de mode avec un seuil ; et un optimiseur (109), conçu pour optimiser le mode de contre-réaction sélectionné par le sélecteur de mode (107) et les paramètres de commande.

29. Noeud d'accès selon la revendication 28, dans lequel le paramètre de sélection de mode est sélectionné sur la base d'un nombre de stations mobiles (110 à 140) et d'un nombre de mini-intervalles de temps transportant les informations de canal.

30. Noeud d'accès selon la revendication 29, dans lequel le paramètre de sélection de mode est calculé d'après $Q = N - \alpha K$, où $Q$ est le paramètre de sélection, $N$ est le nombre de stations mobiles (110 à 140), $K$ est le nombre de mini-intervalles de temps et $\alpha$ est un paramètre de compromis pour déterminer un point de commutation de mode.

31. Noeud d'accès selon la revendication 30, dans lequel le paramètre de commande comprend un seuil de puissance de canal $\eta$ et une probabilité de contre-réaction aléatoire p.

32. Noeud d'accès selon la revendication 31, dans lequel l'optimiseur (109) est conçu pour optimiser le mode de contre-réaction sélectionné afin de maximiser le débit du système.

33. Noeud d'accès selon la revendication 32, dans lequel le débit du système est un débit total moyen des stations mobiles (110 à 140).

34. Noeud d'accès selon la revendication 33, dans lequel l'optimiseur (109) est conçu pour sélectionner le seuil de puissance de canal et la probabilité de contre-réaction aléatoire maximisant le débit total moyen, ce qui constitue les paramètres de commande optimaux.

35. Noeud d'accès selon la revendication 34, dans lequel le débit total moyen est calculé à l'aide de

$$C(p,\eta) = \sum_{j=1}^{N} E_{(\chi_j, S_j, T)}[\log_2(1 + \rho\chi_j)I\{S_j = 1\}]$$

où $\chi_j$ est la puissance de canal d'un $j^{\text{ième}}$ terminal, notée $\chi_j = |h_j|^2$, $S_j$ est un événement de sélection du $j^{\text{ième}}$ terminal au niveau du point d'accès, $T$ est le nombre de terminaux dont les puissances de canal sont au-dessus du seuil de puissance de canal $\eta$, $\rho$ est le rapport moyen signal sur bruit et $I\{\cdot\}$ est une fonction indicatrice.

36. Noeud d'accès selon la revendication 35, dans lequel le seuil de puissance de canal $\eta$ et la probabilité de contre-réaction p sont déterminés d'après

$$\max_{p,\eta} C(p, \eta)$$
$$\text{pour } 0 \leq p \leq 1, \eta \geq 0.$$

37. Terminal mobile (110 à 140) d'un système de communication cellulaire comprenant une pluralité de noeuds d'accès, fonctionnant selon l'un d'au moins deux modes de contre-réaction, sélectionné sur la base d'un paramètre de sélection de mode dérivé de paramètres du système, et une pluralité de stations mobiles, renvoyant des informations de canal en fonction du mode de contre-réaction sélectionné, les modes de contre-réaction définissant comment des ressources de contre-réaction sont attribuées à la pluralité de stations mobiles, comprenant :

un processeur de réception (150), conçu pour produire des informations de canal en mesurant des états du canal ; et

un dispositif de commande de contre-réaction (170), conçu pour ajuster une configuration de contre-réaction sur la base de signaux de commande de contre-réaction reçus du point d'accès (100) et pour renvoyer les informations de canal avec la configuration de contre-réaction.

**38.** Terminal mobile selon la revendication 37, dans lequel le dispositif de commande de contre-réaction (170) comprend :

un sélecteur de mode (173), conçu pour sélectionner un mode de contre-réaction sur la base du signal de commande de contre-réaction ; et

un sélecteur de paramètres (175), conçu pour sélectionner des paramètres à utiliser pour le mode de contre-réaction sélectionné et pour renvoyer les paramètres sélectionnés constituant les informations de canal.

FIG.1

FIG.2

FIG.3

FIG.4

START

Analyze Number of Stations 'N'
and Number of Mini-slots 'K' ~S510

Compute Mode Selection
Parameter 'Q' from 'N' and 'K'
Q=N−αK ~S520

S530

Q≥0    NO

YES

Perform Opportunistic Mode ~S540    Perform Polling Mode ~S550

FIG.5

START

Calculate Average
Sum Rate of all MSs — S541

Determine $\eta$ and p to maximize
the Average Sum Rate — S542

Broadcast a Feedback Request
Message to Active MSs — S543

Receive Feedback Information — S544

S545

$Q \geq Q_{th\_1}$ ?
NO

YES

S546

$Q \geq Q_{th\_2}$ ?
NO

YES

END

FIG.6

START

Receive Mode Selection Message — S561

Extract parameters including η and p
from the Mode Selection Message — S562

Set MS to Opportunistic Mode according
to Feedback Mode Indicator — S563

Configure Parameters for
the Opportunistic Mode — S564

S565

channel gain > η? — NO

YES

Feed Back Channel Information with p — S566

END

FIG.7

Minislot

Uplink | MS 1 | MS 2 | ·············· | MS N−1 | MS N |

50-1　　50-2　　　　　　　　　　　　　50-n−1　　50-n

# FIG.8

Minislot

Uplink | Contention 1 | Contention 2 | ··········· | Contention K−1 | Contention K |

60-1　　60-2　　　　　　　　　　　　60-k−1　　60-k

# FIG.9

Random
Backoff

Uplink

············

Minislot i

# FIG.10

81

Downlink | Polling Set |

Uplink | Mini-slot 1 | Mini-slot 2 | ·········· | Mini-slot N |

82-1    82-2    82-n

# FIG.11

93-1    93-2

Downlink | Reply 1 | | Reply 2 | ············

Uplink | Contention 1 | | Contention 2 | ············

91-1    91-2

# FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005030897 A1

- WO 2004032401 A1